# EUROPEAN PATENT APPLICATION

(11) **EP 4 613 517 A1**
(43) Date of publication of application: **10.09.2025**
(21) Application number: 25161117.4
(22) Date of filing: 28.02.2025
(51) Int. Cl.: B60H 1/00, B60H 1/32

(54) **TRANSPORT REFRIGERATION UNIT WITH MODULAR POWER MODULES**

(30) Priority: 05.03.2024 US 202463561621 P
(71) Applicant: Carrier Corporation, Palm Beach Gardens, FL 33418 (US)
(72) Inventor: KONDRK, Jason, East Syracuse, 13057 (US)
(74) Representative: Dehns

(57) **Abstract**

Described herein is a transport refrigeration unit (TRU). The TRU comprises a refrigeration module (106) configured to be installed on a container (102), and at least one power module (108) configured to be detachably disposed at one or more positions on the container or removably attached to an axle of the container, wherein the at least one power module is configured to be reversibly connected to the refrigeration module via electrical harnesses, and wherein the at least one power module comprising at least one of: an electric power module (108A), a fuel-based power module (108B), or an axle generator (108C) operably connected to the axle of the container.

## Description

### CROSS-REFERENCE TO RELATED APPLICATION

This patent application claims the benefit of U.S. Provisional Patent Application No. 63/561,621, filed on March 5, 2024, which is incorporated by reference herein in its entirety.

### BACKGROUND

The invention relates to the field of transport refrigeration units (TRUs), and more particularly, relates to TRUs having modular power modules.

### SUMMARY

According to a first aspect of the invention, there is provided a transport refrigeration unit (TRU). The TRU comprises a refrigeration module configured to be installed on a container, and at least one power module configured to be either detachably disposed at one or more positions on the container or removably attached to an axle of the container driven by a prime mover, wherein the at least one power module is configured to be reversibly connected to the refrigeration module via electrical harnesses, and wherein the at least one power module comprises at least one of: an electric power module, a fuel-based power module, or an axle generator operably connected to the axle of the container.

Optionally, the fuel-based power module comprises a fuel-powered engine, and a generator configured to generate electric power on being driven by the fuel-powered engine, wherein the electric power generated by the generator is provided to the refrigeration module.

Optionally, the electric power module comprises a battery configured to provide electric power to the refrigeration module.

Optionally, the battery is charged by an electric power source, wherein the electric power source is at least one of: an electrical storage system, a solar panel, a turbine, a power outlet connected to the grid, a thermoelectric generator, a nuclear power generator, or a generator driven by the fuel-based power module.

Optionally, the TRU comprises a power control apparatus, where the power control apparatus comprises any one or combination of rectifiers, inverters, a bi-directional Direct Current (DC)-DC convertor, or a bi-directional Alternating Current (AC)-DC convertor.

Optionally, the at least one power module comprises at least one electric power module and at least one fuel-based power module, wherein both the at least one electric power module and the at least one fuel-based power module are configured to concurrently supply electric power to the refrigeration module.

Optionally, the at least one power module and the refrigeration module are detachably connected to and supported at the one or more positions on the container using at least one attachment means.

Optionally, the one or more positions comprises a set of racks configured to accommodate the at least one power module therein.

Optionally, the one or more positions are formed by a frame extending from the container and configured to support the at least one power module thereover.

Optionally, the TRU further comprises a control unit configured to operably switch a source of electric power to the refrigeration module from a first power module to a second power module among the at least one power module based on instructions from a user.

Optionally, the TRU comprises one or more sensors configured to monitor one or more operational parameters of the refrigeration module and transmit data pertaining to the one or more operational parameters to the control unit.

Optionally, the TRU comprises a human-machine interface (HMI) configured to provide instructions received from the user to the control unit.

Optionally, the HMI is configured to perform at least one of: receive and display the one or more operational parameters monitored by the one or more sensors, display a connection status of each of the at least one power module to the refrigeration module, or receive instructions from the user to switch the source of electric power from the first power module to the second power module.

Optionally, the TRU comprises an HMI configured to manually connect or disconnect the at least one power module to control supply of electric power to the refrigeration module.

Optionally, the control unit is configured to transmit one or more command signals to the at least one power module to operably connect a first power module and/or disconnect a second power module from the at least one power module to supply electric power to the refrigeration module based on the one or more operational parameters monitored by one or more sensors.

Optionally, the control unit is configured to determine a power efficiency value associated with each of the at least one power module based on the one or more operational parameters, and transmit the one or more command signals to operably connect a first power module and/or disconnect a second power module from the at least one power module to supply electric power to the refrigeration module based on the power efficiency value of each of the at least one power module.

Optionally, at least one location sensor among the one or more sensors is configured to determine a location parameter indicating the location of the container.

Optionally, the control unit is configured to receive the location parameter of the container in real-time from the at least one sensor, determine if the location is associated with a restricted area, and transmit one or more command signals to switch connection of a first power module to a second power module from the at least one power module based on the determination.

Optionally, the control unit is configured to generate an alarm to indicate to the user to switch the at least one power module based on the location parameter.

Optionally, the refrigeration module interfaces with the at least one power module using electrical harnesses to receive the electric power.

The foregoing summary is illustrative only and is not intended to be in any way limiting. In addition to the illustrative aspects, embodiments, and features described above, further aspects, embodiments, features, and techniques of the subject disclosure will become more apparent from the following description taken in conjunction with the drawings.

### BRIEF DESCRIPTION OF THE DRAWINGS

The accompanying drawings are included to provide a further understanding of the invention and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A-1D illustrate example representations of a container having a transport refrigeration unit (TRU)
FIGs. 2A-2D illustrate block diagrams of various operation modes of the refrigeration module and power modules of the TRU.

### DETAILED DESCRIPTION

The following is a detailed description of embodiments of the subject disclosure depicted in the accompanying drawings. The embodiments are in such detail as to clearly communicate the subject disclosure. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components described herein may be positioned in any desired orientation. Thus, the use of terms such as "above," "below," "upper," "lower," "first," "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

Transport refrigeration units (TRUs), also referred to as trailer refrigeration units, are used to provide refrigeration or conditioned air to maintain/control temperature within a carrier or a container. The container may store goods/cargo, such as perishables, medications, chemicals, or the like, that are to be kept cool (or warm or heated) during transportation. TRUs are typically attached to transport vehicles, such as trucks and trailers. TRUs can be powered either by electric power, or a fuel-based power. Existing TRUs typically have fixed power sources (i.e. either electric or fuel-based determined at the time of manufacturing or assembly), which limit their adaptability to different environments, situations, and legal constraints in certain regions as the container is transported. This lack of flexibility poses several problems for TRU operators. For example, TRUs powered solely by fuel-based power modules (such as diesel engines) may face challenges in complying with emissions regulations in urban areas or restricted areas where use of fuel-based power modules is prohibited. Meanwhile, TRUs powered solely by electric power modules may employ batteries with large capacities for transporting containers over long distances, which may be expensive and difficult to manage especially in locations with limited access to the power grid.

Hence, it is desirable to have modular power modules that allow the TRU to operably consume power from any one or combination of power modules based on its location, power requirements, and/or charge/fuel level status, to achieve at least one: of compliance with legal requirements, optimized energy consumption, increased air conditioning performance, adaptation to fluctuations in fuel prices, or the like. Modular power modules may allow the appropriate power module to be configured or enabled based on the requirements. Additionally, modular power modules also offer scalability, enabling TRU operators to adjust power capacity according to the specific needs of the cargo, while optimizing for energy usage, greenhouse footprint, and operational costs.

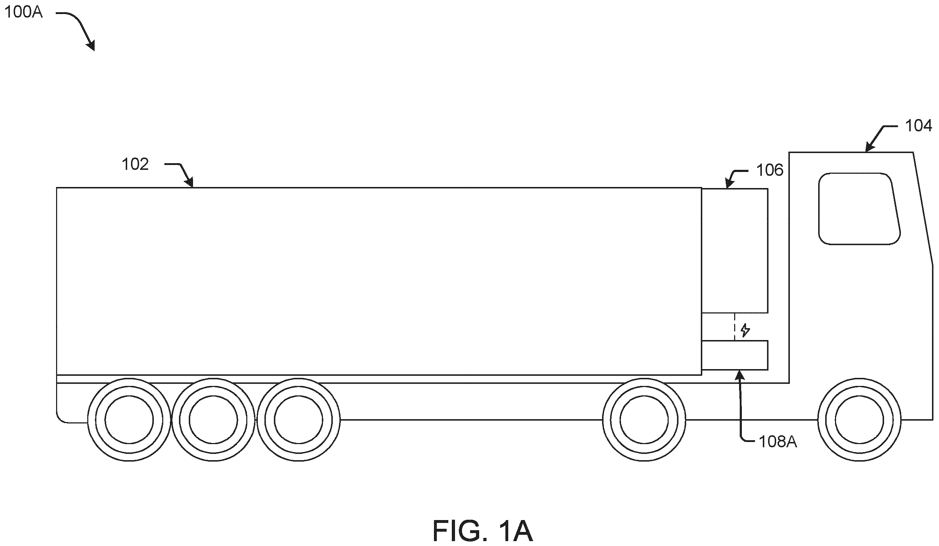

Referring to FIGs. 1A to 1D, in one or more embodiments, the TRU may be configured with a carrier/container/trailer 102 that may store goods or cargo for transportation. The TRU may be powered by power modules, such as power modules 108A, 108B, 108C (hereinafter collectively or in any combination thereof referred to as power modules 108) as shown in example representations 100A, 100B, 100C, and 100D in FIGs. 1A to 1D respectively. The container 102 may be configured to facilitate the maintenance of a homogenous environment within an enclosure (such as by providing an insulated enclosure, for example). The goods stored in the container 102 may employ air conditioning, either for maintaining temperature above or below a threshold and ensuring proper ventilation within the container 102. Examples of the goods may include, but may not limited to, perishable items, medications, pharmaceutical and nutraceutical products, chemicals, and the like. The container 102 may be connected to a vehicle having a prime mover 104 for transporting the container 102. The prime mover 104 may be configured to provide motive force for driving the vehicle. The vehicle may be any of, including, but not limited to, cars, trucks, trailers, trains, cruise ships, flights, submarines, and the like. In some embodiments, the prime mover 104 may be an engine or a motor configured to convert chemical (i.e., in the form of fuel), electrical, or other forms of energy into propulsion or motive force to move the vehicle, and thereby the container 102.

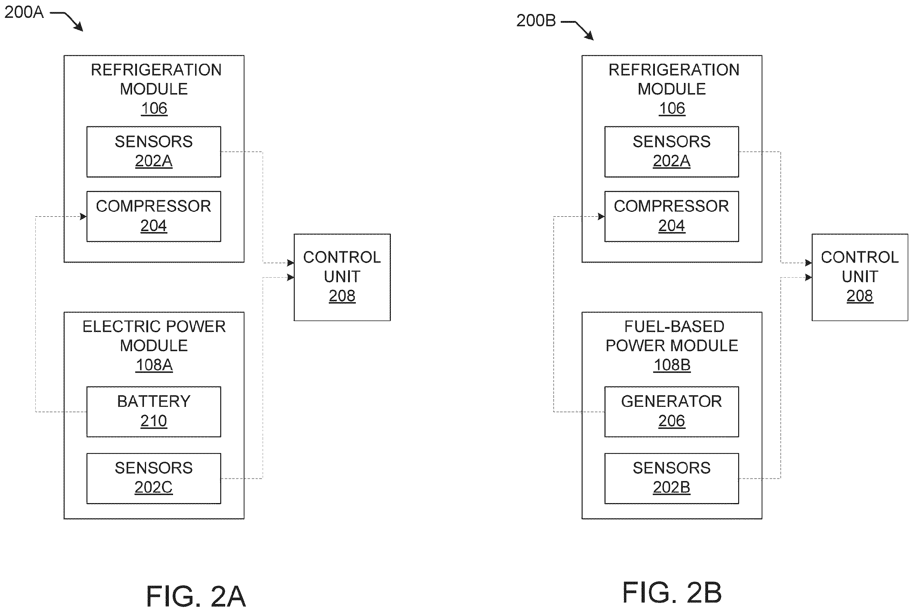

The TRU may include a refrigeration module 106 that may be configured to provide cooling, heating, and/or ventilation, to maintain a desired temperature within the container 102. In one or more embodiments, the refrigeration module 106 may be configured to provide cooling, however, it may suitably be adapted to operate as a heat pump to provide heating to the container 102, in other embodiments. The refrigeration module 106 may include one or more components, such as a compressor, an evaporator, a condenser, and an expansion valve. The compressor (such as compressor 204 shown in FIGs. 2A-2D), for example, may have a pump/motor that may be used to compress a refrigerant/coolant associated with the refrigeration module 106. The motor may be driven by a power source/power module.

In one or more embodiments, the refrigeration module 106 may be powered by at least one power module, such as but not limited to electric power module 108A, fuel-based power module 108B, and/or axle generator 108C. Either one or more of the power modules 108 may be used to drive the refrigeration module 106, or the motors associated with the refrigeration module. The motor may be driven using electric power, or using a mechanical transmission. In one or more embodiments, the power modules 108 may be configured to be removably/reversibly connected to the refrigeration module 106.

As stated, the power modules 108 may be any of, an electric power module 108A, a fuel-based power module 108B, or an axle generator 108C (which may be operably connected to an axle or wheel hub of the container 102 or the vehicle driven by the prime mover 104), but not limited to.

The electric power module 108A may include an electric power source configured to provide/supply electric power to the refrigeration module 106. In one or more embodiments, the electric power source may be a battery (such as battery 210 shown in FIGs. 2B to 2D). The battery 210 may be charged by an external power source, which may be at least one of, electrical storage system (such as electrochemical cells), a solar panel, a turbine, a power outlet connected to an electric grid, a thermoelectric generator, a nuclear power generator, or a generator of the fuel-based power module, but not limited thereto, that may be configured to generate electric power, and store said electric power in the battery 210. The battery 210 may be any one or combination of batteries made of including, but not limited to, lithium-ion, lithium-ion polymer, nickel metal hydride, nickel cadmium, nickel hydrogen, nickel-zinc, silver zinc, and the like. In one or more embodiments, the battery 210 may correspond to an electric power system having one or more battery stacks or battery strings managed by a battery management system (BMS) of the vehicle/container 102. In one or more embodiments, the electric power may be consumed by the refrigeration module 106, such as to drive an electrically powered pump of the compressor 204. In other embodiments, the electric power may be used to drive the mechanical transmission, which in turn drives the compressor 204. The mechanical transmission may also be configured to drive other components of the container 102 or the TRU.

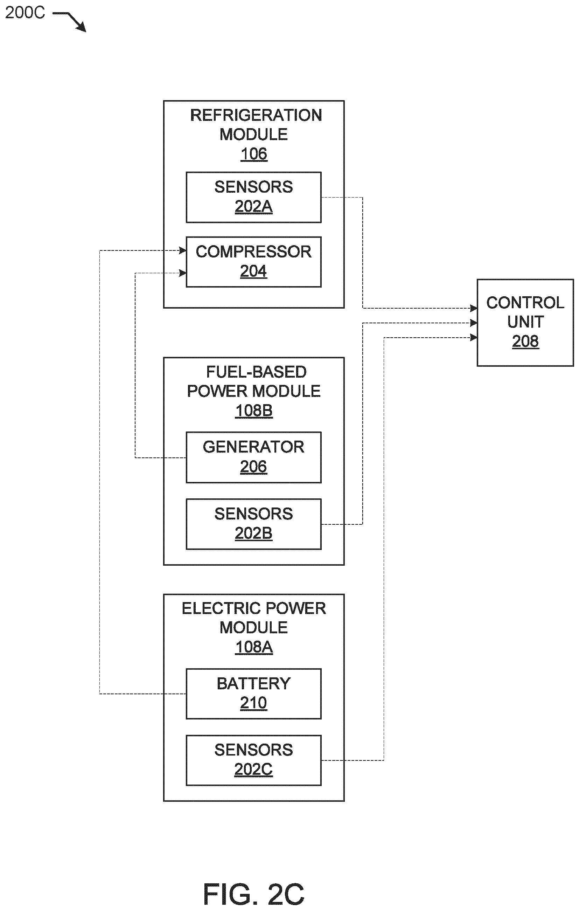

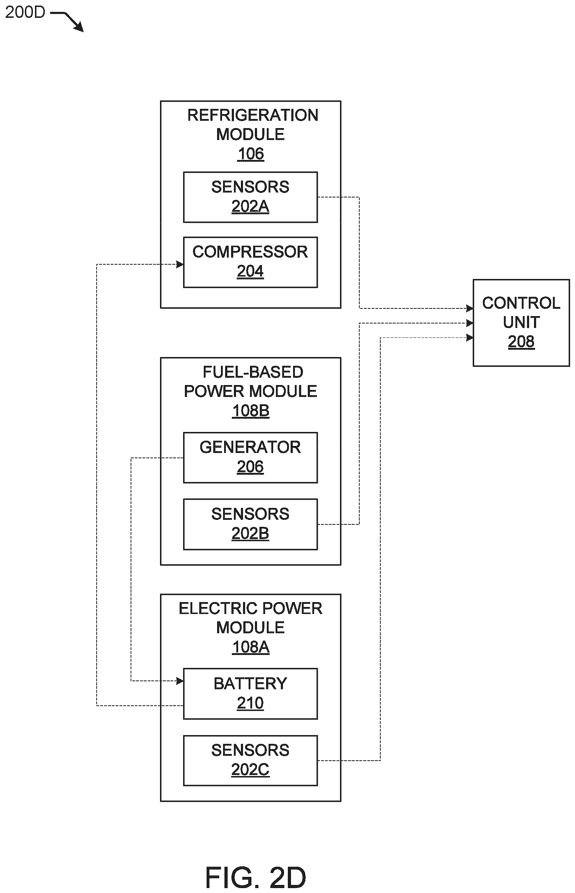

The fuel-based power module 108B may be configured to burn fuel to drive the refrigeration module 106, or the compressor 204 and other components thereof. In one or more embodiments, the fuel-based power module 108B may include a fuel-powered engine, and a generator (such as generator 206 shown in FIGs. 2A, 2C, and 2D) configured to generate electric power on being driven by the fuel-powered engine. The electric power generated by the generator 206 may be provided to the refrigeration module 106. The fuel-powered engine may be configured to drive a rotor by burning/combusting/consuming fuel, such as petrol, diesel, Liquid Petroleum Gas (LPG), Hydrogen, and the like, but not limited thereto. In one or more embodiments, the rotor may be configured to drive, and thereby cause the generator 206 to generate electric power. The generator 206 may be implemented as a dynamo or an alternator. In other embodiments, the fuel-based power module 108B may be connected to the refrigeration module 106, or the pump of the compressor 204 thereof, through a transmission. The mechanical transmission may be connected to the compressor 204 through a clutch mechanism that allows the fuel-based module 108B to be operably connected or disconnected from the refrigeration module 106, based on the desired power module selected for powering said refrigeration module 106.

The axle generator 108C may be configured to generate power from the rotation of the axle of the container 102. In one or more embodiments, the axle generator 108C may include a rotary electromechanical device that produces electrical power from kinetic/mechanical energy generated by the rotation of the axle. The axle generator 108C may be coupled to the axle or wheel hub by including, but not limited to, gears, belts, chains, or the like, and may be disengaged when not needed. In one or more embodiments, the electrical power generated by the axle generator 108C may be supplied to the refrigeration module 106. In other embodiments, the electric power generated by the axle generator 108C may be used to recharge the battery 210 of the electric power module 108A. The axle generator 108C may allow energy to be recovered from the normal operation of the container 102/the vehicle through the prime mover 104.

In one or more embodiments, the TRU may include a power control apparatus (not shown) electrically connected between the power modules 108 and the refrigeration module 106. The power control apparatus may have any one or combination of, but not limited to, rectifiers, inverters, a bi-directional Direct Current (DC)-DC convertor, a bi-directional Alternating Current (AC)-DC convertor, and the like. The power control apparatus may be configured to control and facilitate supply of electric power from the power modules 108 to the refrigeration module 106 in a manner that is conducive with the requirements, and the specifications of the refrigeration module 106. For example, the power control apparatus may convert DC (from the battery 210, for example) to AC current if the refrigeration module 106 is configured to operate on AC.

In one or more embodiments, the refrigeration module 106 may be configured to operate on electric power supplied by the power modules 108. The refrigeration module 106 may include electrical harnesses for receiving electric power for its operations. The refrigeration module 106, or the compressor 204 and other components thereof, may be configured to consume the electric power from the power modules 108 through the electrical harnesses. The electrical harnesses may be conveniently accessible at the positions where the power modules 108 are installed. In one or more embodiments, electrical harnesses may be the only components that may be interfaced with the power modules 108 for installation/connecting the refrigeration module 106 with the power modules 108. By reducing the interface to receive the electric power by electrical harnesses, the refrigeration module 106 may be made adaptable to any power module capable of providing electric power. The desired power module may then be connected to the refrigeration module 106 based on the requirements and/or constraints of the use case, using the electrical harnesses, thereby modularizing the TRU. Such modularization may allow operators/users to choose between different power modules to power the refrigeration module, and may provide advantages of flexibility, adaptability, energy efficiency, and cost-effectiveness.

The power modules 108 may be configured to be detachably attached/connected at one or more (predefined) positions on the container 102, or removably attached to the axle of the container 102.

In one or more embodiments, the positions may correspond to (set of) racks, slots, or compartments configured to accommodate the power modules 108 therein. The geometric profile of the racks may correspond to those of the power modules 108. The racks may be provided at any portion of the container 102. In some embodiments, the racks may be planar structures (such as a plate) provided a surface over which the power modules 108 may be placed. In one or more embodiments, the planar structures may integrally extend from a wall of the container 102, or may be defined on the walls as cavities. The racks may be defined on external surfaces of the walls to facilitate convenient positioning, and/or removal of the power modules 108. The racks may also define provisions or holes to enable the electrical harnesses to pass therethrough, to connect the power modules 108 positioned on the racks with the refrigeration module 106.

In other embodiments, the positions may correspond to frames having one or more rods or beams configured to support the refrigeration module 106 and/or the power modules 108 thereover. The rods/beams may be assembled to define a supporting surface/area and/or a compartment in which the refrigeration module 106 and/or the power modules 108 may be supported. The racks, and/or frames may define compartments according to the geometric profile of the power modules 108 and the refrigeration module 106. In some embodiments, the power modules 108 may be further secured the racks and/or the frames using securement means, such as screws, nails, rivets, nuts and bolts, interlocking structures (such as mortises and pockets), and the like, but not limited thereto. In some embodiments, the racks and/or frames may be made of metals, alloys, carbon fiber, plastics, or any combinations thereof. The racks and/or the frames may also define an open face through which the power modules 108 and/or the refrigeration module 106 may be positioned into the compartments, or removed therefrom. The electrical harnesses may be routed through the racks/frames accordingly to facilitate convenient assembly and disassembly.

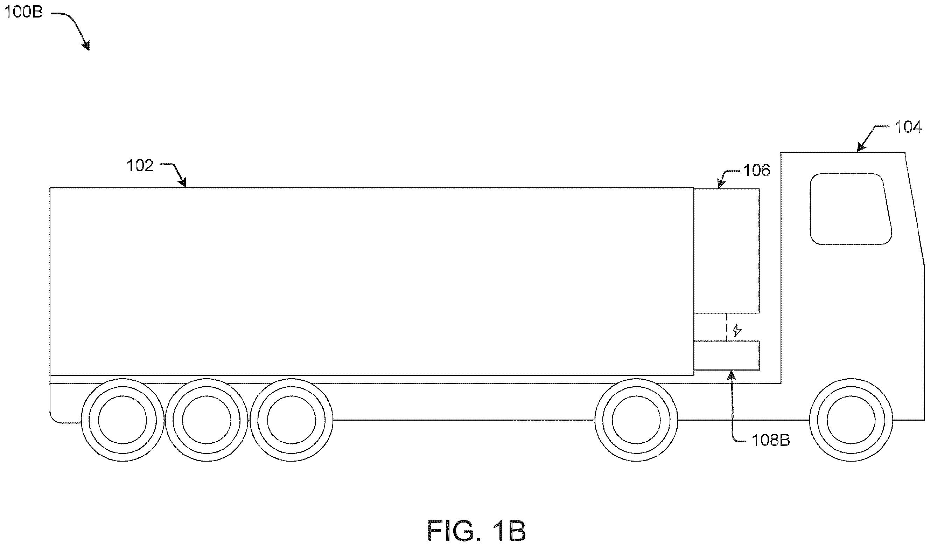

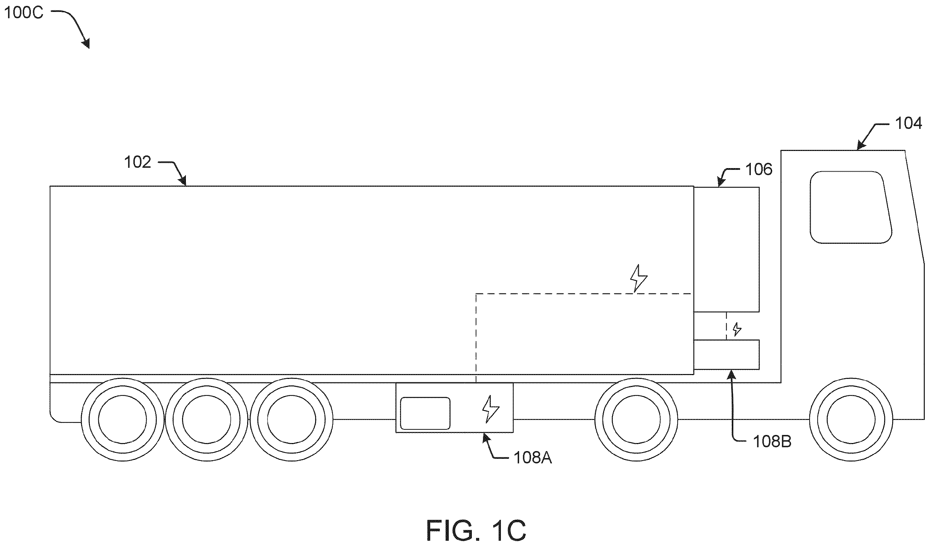

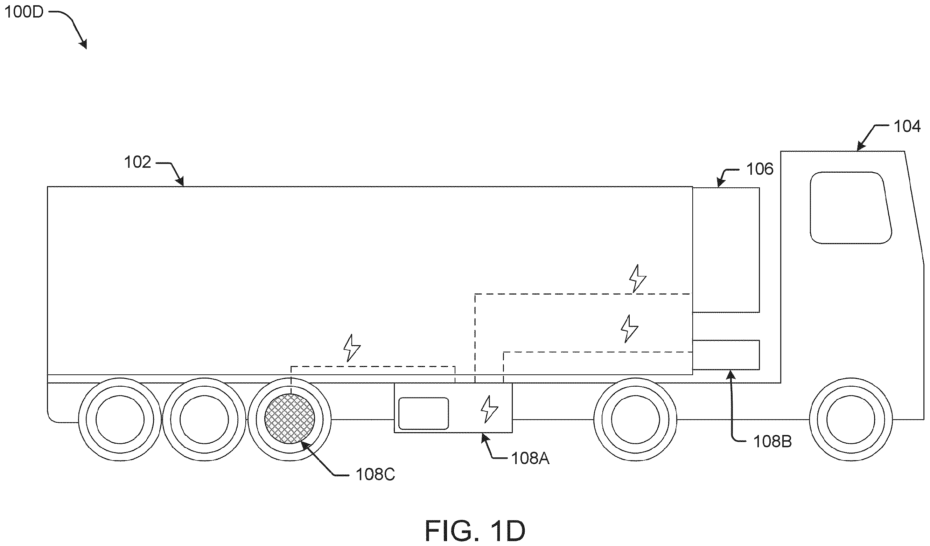

The positions may be portions/sections/location of the container 102 that are in proximity to the refrigeration module 106. The positions may be adjacent to the refrigeration module 106, such as above, below, in front of, behind, or around the lateral surface of the refrigeration module 106. In example embodiments shown in FIGs. 1A and 1B where either the electric power module 108A or the fuel-based power module 108B may exclusively supply electric power to the refrigeration module 106, respectively, the electric power module 108A or the fuel-based power module 108B may be interchangeably positioned below the refrigeration module 106. In example embodiments shown in FIGs. 1C and 1D, the fuel-based power module 108B may be positioned below the refrigeration module 106 and the electric power module 108A may be positioned underneath the container 102, and on a rack defined on the vehicle associated with the prime mover 104. Further, the axle generator 108C may be coupled to at least one of the axle or wheel hub of the vehicle. However, in other embodiments, these power modules 108 may also be positioned at any other positions on the container 102 or the vehicle, without any limitations.

The power modules 108 may be detachably connected to the container 102 supporting the refrigeration module 106 using at least one attachment means. The attachment means may be any one or combination of including, but not limited to, screws, nuts, bolts, nails, rivets, straps, interlocking elements, adhesives, and the like. The attachment means may allow the power modules 108 to be securely, but reversibly, attached to the container 102, or the position thereof. By allowing the power modules 108 to be removably attached to the container 102, the power modules 108 may be removed (such as for maintenance), and/or replaced without requiring modifications to the design of the refrigeration module 106, or the container 102.

In one or more embodiments, a first power module (such as the fuel-based power module 108B) may be replaced with a second power module (such as the electric power module 108A) based on location of the container 102 (such as when the container 102 is moved from a first location that allows use of fuel-based power modules 108B to a second location that prohibits use thereof).

In one or more embodiments, the power modules 108 may be physically placed or removed from the positions to obtain any of the operation modes shown in FIGs. 2A to 2D. However, the power modules 108 may also be temporally disconnected from the refrigeration module 106 without physically removing the power modules 108 from the positions, to allow the TRU to operate in the operation modes shown in FIGs. 2A to 2D. The operation modes shown in FIGs. 2A to 2D may correspond to configurations/arrangement of the power modules 108 in FIGs 1A to 1D respectively.

In one or more embodiments, the TRU may include a control unit (such as control unit 208 shown in FIGs 2A to 2D) configured to operably switch the supply/source of electric power to the refrigeration module 106 from the first power module to the second power module among the power module 108, based on instructions from a user/operator. The operator may use a human-machine interface (HMI) (not shown) to provide instructions to the control unit 208. The HMI may be any one or combination of including, but not limited to, a control panel, a mechanical interface such as buttons, keys, switches, levers, knobs, etc., a mobile device, a display interface, and the like. The HMI may be disposed in the vehicle or the container 102. Alternatively, the HMI may be implemented in an external computing device that communicates with the control unit 208 using wireless communication means, such as Bluetooth, near-field communication, telecommunication, and the like. The HMI may also be configured to display the connection status of each of the power module 108 to the refrigeration module 106. The connection status may indicate to the operator which power modules 108 are electrically connected to the refrigeration module 106.

In one or more embodiments, the HMI may be used to manually connect or disconnect the power modules 108 to control supply of electric power to the refrigeration module 106. For example, the HMI may include the mechanical interface that connects or disconnects the power modules 108 with the electrical harnesses of the refrigeration module 106.

The operator/users of the TRU may use the HMI to switch the source of electric power provided to the refrigeration module 106. The HMI may be used to cause one or combination of the electric power module 108A, the fuel-based power module 108B, or the axle generator 108C to supply electric power to the refrigeration module 106. For example, when the user drives the vehicle attached to the container 102 to the restricted area, the user may use the HMI to cause the fuel-based power module 108B to be disengaged/disconnected and cause the electric power module 108A to provide electric current to the refrigeration module 106, and vice-versa when the user exits the restricted area.

Referring to FIGs. 2A-2D, block diagrams 200A, 200B, 200C, 200D, respectively, of various operation modes of the refrigeration module 106 and power modules 108 of the TRU are shown. As shown, electric power supplied to the refrigeration module 106 may be controlled by the control unit 208. The control unit 208 may include one or more processors. The processor(s) may be implemented as any one of including, but not limited to, controllers, electric circuits, microprocessors, Digital Signal Processor (DSP), Integrated Circuits (IC), and the like. The control unit 208 may be implemented as a Vehicle Control Unit (VCU) associated with the vehicle. The control unit 208 may also include a memory that stores instructions executable by the processor(s) to manage the operation of the TRU. The control unit 208 may be configured to transmit a set of command signals to engage or disengage (or connect or disconnect) one or more of the power modules 108 from the refrigeration module 106 based on instructions received from the user.

In some examples, the control unit 208, on receiving instructions from the user/operator through the HMI, may be configured to transmit command signals to either engage or disengage any of the power modules 108. The terms "engage" and "disengage" may refer to causing the power modules 108 to supply, or prevent supply, respectively, of electric power either directly (such as in operation mode shown in FIG. 2C) or indirectly (such as in operation mode shown in FIG. 2D) to the refrigeration module 106. In one or more embodiments, the control unit 208 may be configured to transmit the command signals, indicative of an electric pulse, that actuates a contactor or a switch placed between each power module 108, and the refrigeration module 106. In such embodiments, appropriate contactors may be actuated such that the desired power modules 108 indicated in the instructions are connected or disconnected from the refrigeration module 106. For example, the control unit 208 may transmit a first command signal to a contactor associated with the fuel-based power module 108B to disconnect said fuel-based power module 108A from the refrigeration module 106. Further, the control unit 208 may transmit a second command signal to the contractor associated with the electric power module 108A to connect said electric power module 108A to the refrigeration module 106.

The TRU may include one or more sensors configured to monitor one or more operational parameters of the refrigeration module 106 and transmit data pertaining to the operational parameters to the control unit 208. In one or more embodiments, the refrigeration module 106 may be configured with one or more sensors 202A. Further, the power modules 108 may also be configured with one or more sensors 202B, 202C. The sensors 202A may be indicative of including, but not limited to, first temperature sensors configured to measure temperature within the container 102, second temperature sensors configured to measure operating temperature of components of the refrigeration module 106 (such as to prevent overheating of components), fluid flow sensors to measure the flow of fluids such as coolants, HMI sensors configured to receive temperature and ventilation requirements from human operators, and the like. The sensors 202B include any one or combination of including, but not limited to, oil temperature sensors, fuel level sensors, humidity sensors, pressure level sensors, and the like. The sensors 202C may include any one or combination of including, but not limited to, oil temperature sensors, voltage sensors, current sensors, battery charge level sensors, and the like. The sensors 202A, 202B, and 202C may be configured to monitor the operational parameters and transmit data pertaining to the operational parameters to the control unit 208 using a wired or wireless communication means, such as a controller access network (CAN), for example. Further, the control unit 208 may be configured with a set of control sensors, such as including, but not limited to, motion sensors, location sensors (such as Global Positioning System (GPS)), HMI configured to receive instructions to switch power modules 108, and the like.

The control unit 208 may be configured to process the data from the sensors 202A, 202B, 202C, and the control sensors (hereinafter collectively referred to as sensors), to generate and transmit the command signals. In one or more embodiments, the control unit 208 may be implemented in the refrigeration module 106, and may be configured to process data from the sensors thereof to operate the refrigeration module 106. In other embodiments, the control unit 208 may be implemented in any of the power modules 108 to control operations thereof based on data received from corresponding sensors. In further embodiments, the control unit 208 may be implemented externally to the refrigeration module 106 and the power modules 108. Further, the HMI may be configured to display the operational parameters monitored by the sensors, to allow the operators of the TRU to analyze the operational parameters, and appropriately provide instructions to optimize performance and energy consumption, among others.

In one or more embodiments, the power modules 108 may include a thermal management unit configured to maintain the temperature of the power modules 108. The thermal management unit may have a radiator to expel excess heat from the power modules. In one or more embodiments, the thermal management unit may be configured to receive data from temperature sensors of the power modules 108, and operate the power modules 108 and corresponding radiators to manage temperatures thereof to optimize efficiency and performance. In such embodiments, the thermal management unit may be implemented in the control unit.

In one or more embodiments, at least one location sensor among the sensors is configured to determine a location parameter indicating the location of the container 102. The control unit 208 may be configured to receive the location parameter of the container in real-time from the location sensor. The control unit 208 may determine if the location parameter is associated with a restricted area. The restricted area may correspond to those locations where the use of fuel-based power modules 108B is prohibited or undesirable. The control unit 208 may transmit the command signals to switch connection of a first power module to a second power module from the at least one power module based on the determination that the location is associated with the restricted area or not. If the container 102 is in the restricted area, the control unit 208 may disengage the first (or fuel-based) power module and engage the second (electric) power module to supply electric power to the refrigeration module 106. If the container 102 is outside the restricted area, the control unit 208 may reconnect/engage the first (or fuel-based) power module to the refrigeration module 106. The control unit 208, hence, may allow power modules 108 to be switched automatically.

In one or more embodiments, the control unit 208 may be configured to determine a power efficiency value associated with each of the power module 108 based on the operational parameters collected by the sensors. For example, the control unit 208 may determine the power efficiency value of the electric power module 108A and the fuel-based power module 108B, i.e. the efficiency with which each of the power modules 108 are able to supply electric power to the refrigeration module 106. If the TRU is operated in a humid environment, indicated by a humidity parameter detected by a humidity sensor among the sensors 202B, the control unit 208 may determine if increased humidity is causing the fuel-based power module 108B to operate inefficiently. If the electric power module 108A is operating more efficiently than the fuel-based power module 108B, the control unit 208 may be configured to transmit the command signals to operably connect the first power module (i.e., the electric power module 108A) and/or disconnect the second power module (i.e., the fuel-based power module 108B) from the at least one power module to supply electric power to the refrigeration module 106 based on the power efficiency value of each of the at least one power module.

In one or more embodiments, the control unit 208 may be configured to generate an alarm to indicate to the user/operator to switch the power modules based on the real-time location (or other operation parameters). In such embodiments, the alarm may be any one or combination of visual or audio indications to the operator. The visual and audio indications may be provided through the HMI, such as indications on the display interface and sound through speakers, respectively.

In one or more embodiments, the control unit 208 may be configured to determine if the operational parameters are within at least one threshold range. The control unit 208 may be configured to transmit one or more command signals to the power module 108 to operably engage the first power module to, and/or disengage the second power module from, the refrigeration module 106 based on the operational parameters being within the at least one threshold range. For example, the control unit 208 may monitor a fuel level operational parameter and battery level operational parameter, and transmit command signals to cause either the fuel-based power module 108B or the electric power module 108A to provide power to the refrigeration module when either the battery level operational parameter or the fuel level operational parameter is below a threshold range, respectively.

As stated, any one or combination of the power modules 108 may be used to supply electric power to the refrigeration module 106. The operators of the TRU may connect the power modules 108 (either physically connected or through transmission of the command signals) in any of the combinations shown in FIGs. 1A to 1D, and 2A to 2D, but not limited thereto. In FIG. 1D, all three power modules 108 (viz., the electric power module 108A, the fuel-based power module 108B, and the axle generator 108C) may be connected in parallel to provide electric power to the refrigeration module 106.

In FIG. 2A, the refrigeration module 106 may be configured to receive power from the electric power module 108A. In FIG. 2B, the refrigeration module 106 may be configured to receive power from the fuel-based power module 108B. Examples where operation mode shown in FIG. 2B may be used include situations where the container 102 is moved outside the restricted area. Examples where operation mode shown in FIG. 2A may be used include situations where the container 102 is moved inside the restricted area. The user/operator or the control unit 208 may operably switch the power modules 108 based on the real-time location of the prime mover 104.

In one or more embodiments, both the electric power module 108A and the fuel-based power module 108B may be attached to the container 102 to provide a "hybrid" operation mode, as shown in FIGs. 2C and 2D, but the operation modes may not be limited thereto. In such embodiments, any combination of the power modules 108 may be connected to provide electric power to the refrigeration module 106. In FIG. 2C, the TRU may be configured with both the electric power module 108A, and the fuel-based power module 108B. In such embodiments, both the power modules 108 may be configured in parallel to supply electric power to the compressor 204 of the refrigeration module 106. Electric power from both the power modules 108 may be supplied concurrently to the refrigeration module 106. The electric power supplied by the power modules 108 may be regulated by the power control apparatus. By concurrently supplying electric power from both the power modules 108 to the refrigeration module 106, the efficiency and power supply capabilities of the TRU may be improved.

In FIG. 2D, the TRU may be configured with at least the electric power module 108A, and the fuel-based power module 108B. In the embodiments shown in FIG. 2D, the generator 206 of the fuel-based power module 108B may be configured to supply electric power to charge the battery 210 of the electric power module 108A. Such operation modes may be useful in on-road applications where access to electrical grid to charge the battery 210 is limited, and where only the electric power module 108A is configured to drive the compressor 204, thereby extending the lifespan of the battery 210.

In other embodiments, although all three power modules 108A, 108B, 108C may be attached to the container 102, only one or a subset of the power modules 108 may be configured to supply electric power to the refrigeration module 106. Further, while FIGs. 2A-2D illustrates combinations of the electric power module 108A and the fuel-based power module 108B, the TRU may be suitably adapted to consume electric power generated by the axle generator 108C, or any other power source, based on the requirement.

Thus, the subject disclosure provides a TRU with modular power modules that are operably configurable to supply electric power to refrigeration modules in any preferred operation mode based on requirements. The TRU disclosed herein allows operators to operably switch the source of electric power supplied to the refrigeration module, thereby availing advantages of both fuel-based power modules and electric power modules. Further, the modularity of the TRU allows for enhanced adaptability to different environments, situations, and legal constraints in certain regions as the container is transported.

While the subject disclosure has been described with reference to exemplary embodiments, various changes may be made and equivalents may be substituted for elements thereof without departing from the scope of the invention as defined by the appended claims. Modifications may be made to adopt a particular situation or material to the teachings of the subject disclosure without departing from the scope of the invention as defined by the claims. Therefore, it is intended that the invention not be limited to the particular embodiment disclosed, but that the invention includes all embodiments falling within the scope of the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A transport refrigeration unit (TRU), comprising:
a refrigeration module (106) configured to be installed on a container (102); and
at least one power module (108) configured to be either detachably disposed at one or more positions on the container or removably attached to an axle of the container driven by a prime mover (104),
wherein the at least one power module is configured to be reversibly connected to the refrigeration module via electrical harnesses, and
wherein the at least one power module comprises at least one of: an electric power module (108A), a fuel-based power module (108B), or an axle generator (108C) operably connected to the axle of the container.

2. The TRU of claim 1, wherein the fuel-based power module comprises:
a fuel-powered engine; and
a generator (206) configured to generate electric power on being driven by the fuel-powered engine, wherein the electric power generated by the generator is provided to the refrigeration module.

3. The TRU of claim 1 or 2, wherein the electric power module comprises a battery (210)
configured to provide electric power to the refrigeration module; and, optionally, wherein the battery is charged by an electric power source, and wherein the electric power
source is at least one of: an electrical storage system, a solar panel, a turbine, a power outlet connected to a grid, a thermoelectric generator, a nuclear power generator, or a generator driven by the fuel-based power module; and, further optionally,
further comprising a power control apparatus comprising any one or combination of rectifiers, inverters, a bi-directional Direct Current (DC)-DC convertor, or a bi-directional Alternating Current (AC)-DC convertor.

4. The TRU of any preceding claim, wherein the at least one power module comprises at least one electric power module and at least one fuel-based power module, and wherein both the at least one electric power module and the at least one fuel-based power module are configured to concurrently supply electric power to the refrigeration module.

5. The TRU of any preceding claim, wherein the at least one power module and the refrigeration module are detachably connected to and supported at the one or more positions on the container using at least one attachment means.

6. The TRU of any preceding claim, wherein the one or more positions comprise a set of racks configured to accommodate the at least one power module therein.

7. The TRU of any of claims 1 to 6, wherein the one or more positions are formed by a frame extending from the container, and configured to support the at least one power module thereover.

8. The TRU of any preceding claim, further comprising a control unit (208) configured to operably switch source of electric power to the refrigeration module from a first power module to a second power module among the at least one power module based on instructions from a user; and/or
further comprising one or more sensors (202B, 202C) configured to monitor one or more operational parameters of the refrigeration module and transmit data pertaining to the one or more operational parameters to a control unit.

9. The TRU of any preceding claim, further comprising a human-machine interface (HMI) configured to provide instructions received from a user to a control unit.

10. The TRU of claim 9, wherein the HMI is configured to perform at least one of:
receive and display the one or more operational parameters monitored by one or more sensors;
display a connection status of each of the at least one power module to the refrigeration module; or
receive instructions from the user to switch the source of the electric power from a first power module to a second power module from the at least one power module.

11. The TRU of any preceding claim, further comprising a human-machine interface (HMI) configured to manually connect or disconnect the at least one power module from the refrigeration module; and/or
further comprising a control unit configured to transmit one or more command signals to the at least one power module to operably connect a first power module and/or disconnect a second power module from the at least one power module to supply electric power to the refrigeration module based on one or more operational parameters of the refrigeration module monitored by one or more sensors.

12. The TRU of any preceding claim, further comprising a control unit configured to:
determine a power efficiency value associated with each of the at least one power module based on one or more operational parameters of the refrigeration module monitored by one or more sensors; and
transmit one or more command signals to operably connect a first power module and/or disconnect a second power module from the at least one power module to supply electric power to the refrigeration module based on the power efficiency value of each of the at least one power module.

13. The TRU of any preceding claim, further comprising a control unit configured to:
receive a location parameter indicative of a location of the container in real-time from at least one location sensor;
determine if the location is associated with a restricted area; and
transmit one or more command signals to switch connection of a first power module to a second power module from the at least one power module based on the determination.

14. The TRU of claim 13, wherein the control unit is configured to generate an alarm to indicate to a user to switch the at least one power module based on the location parameter.

15. The TRU of any preceding claim, wherein the refrigeration module interfaces with the at least one power module using the electrical harnesses to receive the electric power.
